# EUROPEAN PATENT APPLICATION

(11) **EP 2 030 718 A1**
(43) Date of publication of application: **04.03.2009**
(21) Application number: 08162341.5
(22) Date of filing: 13.08.2008
(51) Int. Cl.: B23K 26/34, B23P 6/04, C22C 19/05, F01D 5/00, B23K 101/00

(54) **Method of repairing nickel-based alloy articles**

(30) Priority: 31.08.2007 US 848660
(71) Applicant: General Electric Company, Schenectady, NY 12345 (US)
(72) Inventor: Chen, Jianqiang, Greenville, South Carolina 29615 (US); Jackson, Joseph Jay, Greer, South Carolina 29650 (US)
(74) Representative: Szary, Anne Catherine

(57) **Abstract**

Methods for repairing nickel based alloy articles such as gas turbine rotors (12) generally includes a removing a damaged portion (28) of the articles and laser cladding a high temperature nickel based alloy powder thereto to form a solid layer (30). The process can be repeated until a desired thickness is obtained. Optionally, a peening process subsequent to laser cladding can be implemented to introduce compressive stress to the solid layer (30) formed by laser cladding.

## Description

### BACKGROUND OF THE INVENTION

The present disclosure generally relates to the repair of nickel-based alloy articles, more specifically, to the repair of nickel based alloy rotor discs used in the operation of gas and/or steam turbine systems.

In gas turbines, air is drawn into the front of the turbine, compressed by a compressor, and mixed with fuel. The mixture is combusted, and the resulting hot combustion gas is passed through the turbine. The turbine includes a rotor with turbine blades supported on its periphery, and a stationary portion (that is, not rotating) mainly consisting of nozzles to direct gas flow and shrouds to radially confine the gas flow. The combustion gas flows through the annulus between the rotor and the shrouds and drives rotation of the turbine blades. The constrained flow of hot combustion gas turns the turbine rotor by driving an airfoil portion of the turbine blades, which turns the turbine rotor and provides output to a generator. The turbine rotor and stationary components are subject to high temperature and loading during operation. In order to have good elevated temperature capability, turbine rotor discs are often made of nickel based alloys, e.g., type 706 and 708. These alloys require fine grain microstructure that is normally achieved by thermal mechanical work e.g., a series of forging and heat treatment operations.

Turbine rotor discs experience high thermal stresses during start up and shut down cycles as well as centrifugal and vibratory stresses during operation. The high thermal stresses and cyclic operating loads can cause low and high cycle fatigue damage to turbine rotor discs. After long term service, cracking can occur at the areas with high geometric Kt, i.e., small radii of blade attachment areas of rotor disc rim. Nickel base alloys 706 and 718 are especially susceptible to a type of failure mode known as low cycle fatigue with hold time. Cracks initiates under low cycle fatigue with hold time condition will continue to grow increasingly faster because of vibratory operating stresses (resulting in high cycle fatigue) until failure of the part. Nickel based alloy turbine rotor discs are considered to be un-repairable using conventional fusion welding methods since conventional fusion welds of nickel based alloys have a large cast grain microstructure, which results in a significantly lower fatigue and hold time fatigue capabilities. Conventional weld buildups of nickel based alloys are not capable of withstanding turbine rotor operating conditions.

Accordingly, a need exists to repair nickel-based alloy rotors for longer service use.

### BRIEF DESCRIPTION OF THE INVENTION

Disclosed herein are methods for repairing a nickel based alloy article. In one embodiment, a method for repairing an article formed of a nickel based alloy comprises removing a damaged volume of the article to expose a non-damaged surface; depositing a nickel based alloy powder onto the non-damaged surface to replace the damaged volume; and laser cladding the nickel based alloy powder into a solid layer; and optionally repeating the deposition of the nickel based alloy powder and the laser cladding process to attain a desired thickness.

In another embodiment, a method for repairing a nickel-based alloy article comprises removing a portion about a crack in the nickel-based alloy article to expose a surface free of cracks; moving a YAG-generated laser beam over the removed portion; providing an alloy powder to the surface free of cracks; and generating sufficient power to the YAG-generated laser beam to form a solid layer and affect a fusion bond between the alloy powder and the surface free of cracks.

Additionally disclosed herein is a rotor wheel repaired by the above methods.

The above described and other features are exemplified by the following figures and detailed description.

### BRIEF DESCRIPTION OF THE DRAWINGS

Referring now to the figures, which are of an exemplary embodiment, and wherein the like elements are numbered alike:
FIG. 1 shows a fragmentary sectional view of a portion of an exemplary gas turbine illustrating a turbine rotor disc;
FIG. 2 shows crack formation in a turbine rotor disc at areas with sharp radii such as may be due from hold-time low cycle fatigue;
FIG. 3 illustrates removal of damage portions of the turbine rotor disc of FIG. 2;
FIG. 4 illustrates rebuilding the removed damage portions of the turbine rotor disc of FIG. 3 using powder metal laser cladding process; and
FIG. 5 is a flow chart of an exemplary embodiment for repairing cracks in a nickel based alloy rotor disc.

### DETAILED DESCRIPTION

Disclosed herein is a method for repairing damaged areas, e.g., cracks, oxidized areas, and the like, in a nickel-based alloy articles such as a turbine rotor component. The method generally includes removing damaged areas (cracked and oxidized areas) with a machining process; and refilling the machined troughs (removed areas) by laser cladding with a grade ultra-fine powder metal nickel alloy, e.g., ARA 725, 718 or 706, which have mesh sizes of -150 or finer. The clad layers are free of porosities and cracks, and exhibit a homogenous fine grain microstructure (equivalent or finer than the parent metal grain size). A balanced heat input (available for powder melting and bonding, but no excess for grain growth and dilution/alloying), multiple-pass laser cladding process is developed to produce uniform, rapidly solidified and cooled buildup layers that have a fine grain microstructure; and the process gives rise to a minimal distortion of the original component.

In this method, powder metal is pre-injected into a trough's surface and melted by a laser beam, wherein the heated metal is shrouded with an inner gas. Laser beam power density, component feed rate, and gas flow rate are precisely controlled so that the applied laser energy is for melting powder and forming a fusion bond with parent metal. Slight over injection of powder can be used to achieve heat input balance. Un-fused powder is removed by suction of a nozzle and can be used after recycling. The cladding buildup by this method has a fine grain microstructure that results in equal or better fatigue and hold-time fatigue properties than the rotor disc parent metal. The buildup volume should be sufficient to replace the damaged volume to a thickness equivalent to that of the removed portion. Ultrasonic peening, laser shock peening or flap peening can optionally be performed to achieve a uniform layer of compressive stress. Compressive stresses can be desirable in increasing resistance to fatigue failures, corrosion fatigue, stress corrosion cracking, hydrogen assisted cracking, fretting, galling, erosion caused by cavitation, and the like.

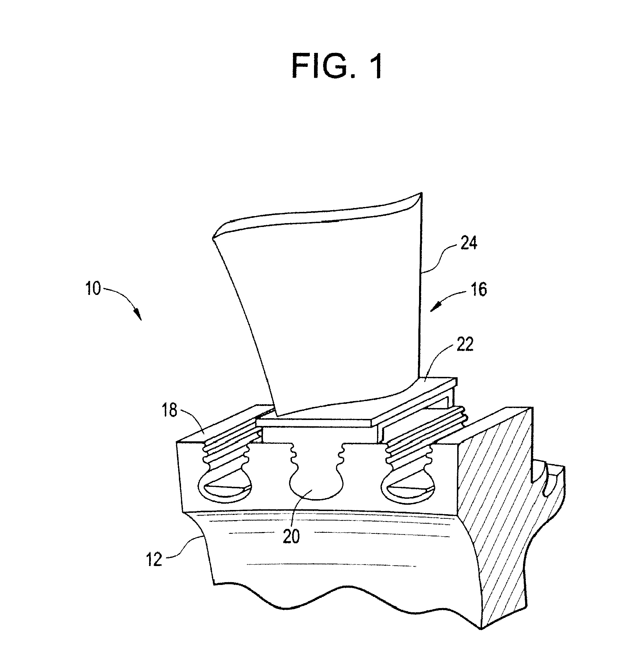

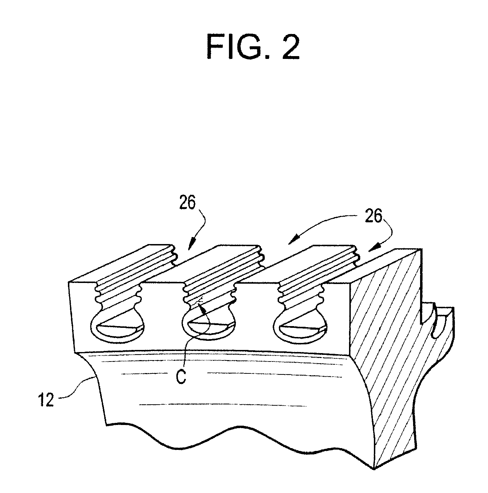

FIG. 1 presents a simplified depiction of the relevant portions of a gas turbine 10, illustrating only the components of interest. The gas turbine 10 generally includes several turbine disks 12 (i.e., rotor) that are bolted together, one of which is shown. A plurality of turbine blades 16, one of which is shown for clarity, extend radially outwardly from a periphery 18 of the turbine disk 12. Each blade 16 comprises a dovetail 20, a platform 22, and an airfoil 24. The dovetail 20 is slidably inserted into and thereby disposed in a complementary shaped dovetail groove 26 (see FIG. 2) extending into the outer circumference of the rotor disk 12. A gas turbine stationary flow path shroud (not shown) forms a tunnel-like structure in which the turbine disk 12 and the turbine blades 16 rotate. The gas turbine stationary flow path shroud is termed "stationary" and does not rotate as the turbine disk 12, and the turbine blades 16 rotate.

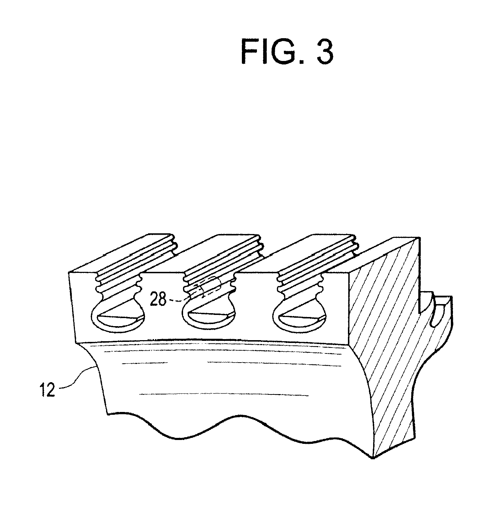

As shown in FIG. 2, a crack C about a peripheral edge (at the blade attachment area, dovetail) of the turbine disk 12 often occurs and is believed to result from occurrence of one or more of the aforementioned failure mechanisms, such as for example, hold time low cycle fatigue, or high cycle fatigue. Cracks normally first occur at small radii and edges of disc dovetail where there is high concentrated operating and thermal stresses. The present invention therefore involves the removal of a damaged portion 28 (as indicated by dotted lines in FIG. 3) about a dovetail groove 26 of the crack C and its replacement by laser cladding buildup.

The turbine disk 12 has original dimensions within specified tolerances according a design specification by which it was built. Alternatively, the original dimensions can be the shape of the workpiece before applying a repair method to the workpiece. These dimensions can specifically include surface features like holes or crevices or fingers as well as surface textures as may be desired for different applications. The turbine disk, i.e. rotor is formed of a nickel-based alloy.

By way of example, the rotor can be formed of a nickel-based super alloy composition commercially obtained under the tradename "Inconel Alloy 706" (hereinafter "Alloy 706"). Inconel Alloy 706 can be used to form the rotor because it has a high strength up to 1200 degrees Fahrenheit and high resistance to embrittlement. However, operating stress, thermal fatigue stresses, chemical attack, or another means can cause the alloy crack, which can be located near the rim or edge of the turbine disk 12. Inconel Alloy 706 has the following composition as provided in Table 1.

**Table 1: Alloy 706 Composition**

| **Element** | **Weight Percent** |
|---|---|
| carbon | 0.06 max. |
| manganese | 0.35 max |
| phosphorus | 0.35 max. |
| sulfur | 0.015 max. |
| chromium | 14.5 to 17.5 |
| nickel | 39 to 44 |
| niobium | 2.5 to 3.3 |
| titanium | 1.5 to 2 |
| aluminum | 0.4 max. |
| boron | 0.006 max. |
| copper | 0.3 max. |
| iron | balance |

When a crack forms in the nickel-based alloy, the damaged volume 26 surrounding the crack C is removed to expose a surface of the rotor that is free from damage. The damaged volume is the bulk material surrounding the crack, and can be removed mechanically or chemically. A method of removal includes, without limitation, milling, cutting, or laser cutting.

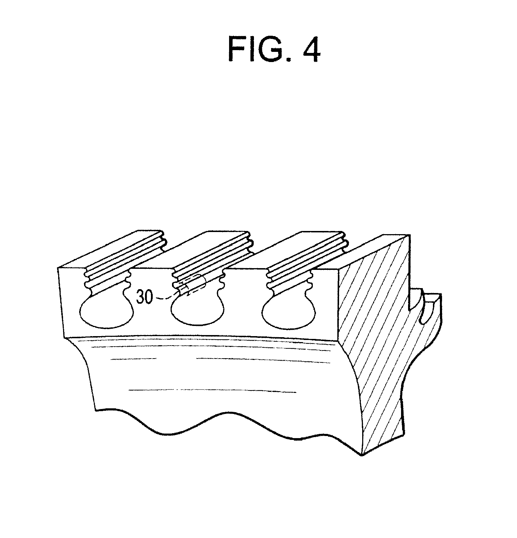

Once the damaged volume 26 is removed, a powder metal of a nickel based alloy is deposited by a laser cladding process to the surface as shown in FIG. 4. In one embodiment, the nickel-based alloy powder is selected to have a melting point higher than about 1,260 degrees Celsius. A specific example of a suitable nickel-based alloy is ARA725. ARA725 is a gamma-prime precipitation-strengthened nickel-base super alloy based on the commercially available Inconel Alloy 725. ARA725 has a composition of, by weight, about 19 to about 23 percent chromium, about 7 to about 8 percent molybdenum, about 3 to about 4 percent niobium, about 4 to about 6 percent iron, about 0.3 to about 0.6 percent aluminum, about 1 to about 1.8 percent titanium, about 0.002 to about 0.004 percent boron, about 0.35 percent maximum manganese, about 0.2 percent maximum silicon, about 0.03 percent maximum carbon, the balance nickel and incidental impurities.

A specific process of making the powders and the powder parameters is typically accomplished by vacuum induction melting processing but could also be performed by adaptation of electro slag remelting or vacuum arc remelting processes to provide melt for subsequent atomization or other powder making method. In view of the reactivity of elements (e.g., aluminum and titanium) contained in preferred gamma prime and gamma double prime precipitation-strengthened alloys, the melt is formed under vacuum or in an inert environment (hereinafter, a controlled environment). While in the molten condition and within chemistry specifications, the alloy is converted into powder by atomization or another suitable process to produce generally spherical powder particles. The particles are produced by atomization to have diameters of predominantly 0.004 inch (about 0.100 mm) or smaller. The powder is then sieved in a controlled environment to remove essentially all particles larger than 0.004 inch (about 0.100 mm) for the purpose of reducing the potential for defects in the subsequent billet/forgings. Larger powder sizes may be acceptable if defect particles (e.g., ceramics, etc.) larger than 0.004 inch (about 0.100 mm) can be removed other than by a screening process. Any required storage of such powders is preferably in a controlled environment container.

While or after the powder metal is injected onto the surface, a laser heats the powder metal with a shielding gas to fusion bond the powder to the surface and form a solid layer, i.e., a laser cladding process. The process setting (mainly feed rate, laser heat input and gas flow rate) is controlled such that an amount of laser energy is available to only melt powder and form a good fusion bond to component surface. Without applying excess energy the deposited layer rapidly solidifies, cools down and yields a fine grain structure. Fine grain structure of rapidly solidified cladding buildup results in improved fatigue and hold time fatigue capability. A specific example of suitable laser is YAG based laser such as a Nd:YAG (neodymium-doped yttrium aluminum garnet; Nd:Y₃Al₅O₁₂) laser. This particular laser emits a light at a wavelength of 1,064 nm and is held at each location at a power effective to fusion bond the powder and form the solid layer. With laser cladding process, there is a minimal dilution of the deposited alloy and a minimal heat-affected zone (HAZ) in comparison with that of a conventional weld. The HAZ is usually the weak link of a weldment, which has inferior mechanical properties. Multiple layers fill the entire bulk volume of the removed portion 26. This process is repeated until the thickness of the layers has formed a build up to at least within the tolerance of the original dimensions of the design specification.

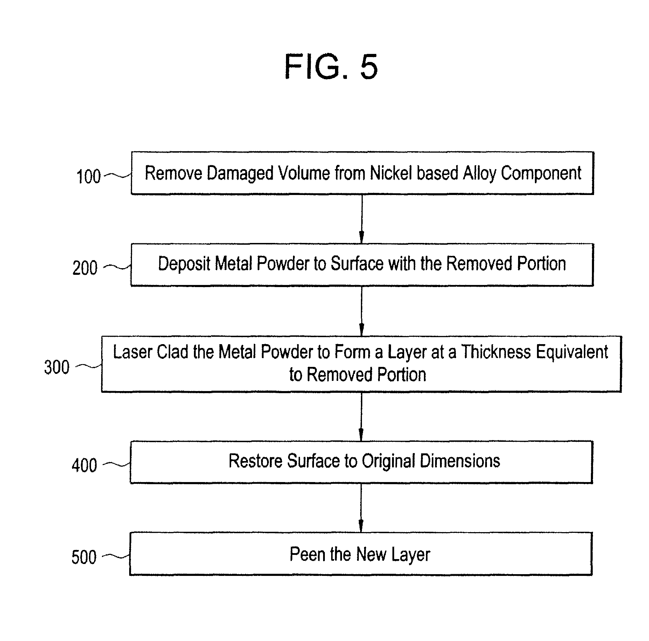

After the solid layer 30 is formed in the removed portion 26, the original dimensions can be restored, peened, and the rotor returned to service. FIG. 5 is a flow chart of an exemplary embodiment of a method of repairing a nickel-based alloy rotor wheel 12. The process generally includes removing a damaged portion of the rotor as in step 100, which is followed by a laser cladding process as described above. The laser cladding process generally includes providing an alloy powder to the non-damaged surface of the removed portion as in step 200 and moving a YAG-generated laser beam over the removed portion and generating sufficient power to the laser to affect a fusion bond between the alloy powder and the non-damaged surface of the removed portion as in step 300. The process can be repeated until a desired thickness is obtained as in step 400. Optionally, the restored surface can be peened to increase the compressive stresses in the layer as shown in step 500.

Advantageously, the repair process permits an end user to salvage turbine disks for longer service use, slowing down the need for replacement components and reducing the cost of operating and maintaining a turbine.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

Unless defined otherwise, technical and scientific terms used herein have the same meaning as is commonly understood by one of skill in the art to which this invention belongs. The terms "a" and "an" do not denote a limitation of quantity, but rather denote the presence of the referenced item. The modifier "about" used in connection with a quantity is inclusive of the stated value and has the meaning dictated by the context (e.g., includes the degree of error associated with measurement of the particular quantity).

Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A method for repairing an article formed of a nickel based alloy, comprising:
removing a damaged volume (28) of the article to expose a non-damaged surface;
depositing a nickel based alloy powder onto the non-damaged surface to replace the damaged volume (28); and
laser cladding the nickel based alloy powder into a solid layer (30); and optionally repeating the deposition of the nickel based alloy powder and the laser cladding process to attain a desired thickness.

2. The method of Claim 1, wherein the article is formed of a nickel based alloy comprising, by weight, nickel at 39 to 44%, chromium at 14.5 to 17.5%, niobium at 2.5 to 3.3%, and titanium at 1.5 to 2%.

3. The method of Claim 2, wherein the nickel based alloy further comprises less than or equal to 0.06% carbon.

4. The method of any preceding Claim, further comprising peening the solid layer (30).

5. The method of any preceding Claim, wherein the nickel based alloy powder is a gamma-prime precipitation-strengthened nickel-base super alloy.

6. The method of any preceding Claim, wherein the nickel based alloy powder comprises, by weight, about 19 to about 23 percent chromium, about 7 to about 8 percent molybdenum, about 3 to about 4 percent niobium, about 4 to about 6 percent iron, about 0.3 to about 0.6 percent aluminum, about 1 to about 1.8 percent titanium, about 0.002 to about 0.004 percent boron, about 0.35 percent maximum manganese, about 0.2 percent maximum silicon, about 0.03 percent maximum carbon, the balance being nickel and incidental impurities.

7. The method of any preceding Claim, wherein removing the damaged volume (28) comprises removing a portion about a crack (C) formed in the article.

8. The method of any preceding Claim, wherein the article is a turbine rotor disc (12).

9. The method of any preceding Claim, wherein the damaged volume (28) is an area about a crack (C) or an oxidized area of a dovetail portion (26) of a turbine rotor disc (12).
